# FASCICULE DE BREVET EUROPEEN

(11) **EP 3 826 973 B1**
(45) Date de publication et mention de la délivrance du brevet: **13.03.2024**
(21) Numéro de dépôt: 19742385.8
(22) Date de dépôt: 25.07.2019
(51) Int. Cl.: C03C 17/36

(54) **MATERIAU COMPRENANT UN SUBSTRAT MUNI D'UN EMPILEMENT A PROPRIETES THERMIQUES**
MATERIAL MIT EINEM SUBSTRAT MIT EINEM STAPEL MIT THERMISCHEN EIGENSCHAFTEN
MATERIAL COMPRISING A SUBSTRATE PROVIDED WITH A STACK HAVING THERMAL PROPERTIES

(30) Priorité: 26.07.2018 FR 1856962
(43) Date de publication de la demande: 02.06.2021
(73) Titulaire: Saint-Gobain Glass France, 92400 Courbevoie (FR)
(72) Inventeur: JEAN, Cyril, 75020 PARIS (FR); WANAKULE, Nisita, 75019 PARIS (FR)
(74) Mandataire: Saint-Gobain Recherche
(86) Numéro de dépôt international: PCT/EP2019/070096
(87) Numéro de publication internationale: WO 2020/021033

(56) Documents cités:
- WO-A1-2010/142926
- WO-A1-2011/020974
- WO-A1-2014/177798
- WO-A1-2017/006027
- WO-A1-2017/006029
- WO-A1-2017/006030

## Description

L'invention concerne un matériau, tel qu'un vitrage, comprenant un substrat transparent revêtu d'un empilement de couches minces comprenant plusieurs couches fonctionnelles pouvant agir sur le rayonnement solaire et/ou le rayonnement infrarouge. L'invention concerne également les vitrages comprenant ces matériaux ainsi que l'utilisation de tels matériaux pour fabriquer des vitrages d'isolation thermique et/ou de protection solaire.

Ces vitrages peuvent être destinés aussi bien à équiper les bâtiments que les véhicules, en vue notamment de diminuer l'effort de climatisation et/ou d'empêcher une surchauffe excessive, vitrages dits « de contrôle solaire » et/ou diminuer la quantité d'énergie dissipée vers l'extérieur, vitrages dits « bas émissifs » entraînée par l'importance toujours croissante des surfaces vitrées dans les bâtiments et les habitacles de véhicules.

Selon les climats des pays où sont installés ces vitrages, les performances en termes de transmission lumineuse et de facteur solaire recherchées peuvent varier dans une certaine gamme. La transmission lumineuse doit être suffisamment faible pour supprimer l'éblouissement et suffisamment élevée pour que la diminution de la quantité de lumière pénétrant à l'intérieur de l'espace délimité par ledit vitrage ne rende pas obligatoire l'utilisation de la lumière artificielle. Par exemple, dans les pays où les niveaux d'ensoleillement sont élevés, il existe une demande forte de vitrage présentant une transmission lumineuse de l'ordre ou supérieure à 50 % et de préférence la plus élevée possible pour des valeurs de facteur solaire basses, typiquement inférieures ou égales à 30 %, c'est-à-dire dont la sélectivité est de l'ordre de 1,8 ou légèrement supérieure pour un double vitrage et avec l'empilement de couches minces en face 2.

Des vitrages comprenant des substrats transparents revêtus d'un empilement de couches minces comprenant trois couches fonctionnelles métalliques, chacune disposée entre deux revêtements diélectriques ont été proposés afin d'améliorer la protection solaire tout en conservant une transmission lumineuse suffisante. Ces empilements sont généralement obtenus par une succession de dépôts effectués par pulvérisation cathodique éventuellement assistée par champ magnétique. Ces vitrages sont qualifiés de sélectifs car ils permettent :
- de diminuer la quantité d'énergie solaire pénétrant à l'intérieur des bâtiments en présentant un faible facteur solaire (FS ou g),
- de garantir une transmission lumineuse suffisante,
- de présenter une faible émissivité pour réduire la déperdition de chaleur par le rayonnement infrarouge de grande longueur d'onde.

Selon l'invention, on entend par :
- facteur solaire « g », le rapport en pourcentage entre l'énergie totale entrant dans le local à travers le vitrage et l'énergie solaire incidente,
- sélectivité « S », le rapport entre la transmission lumineuse et le facteur solaire TL/g.

Les matériaux de l'art antérieur permettent d'obtenir des valeurs de transmission lumineuse, de facteur solaire, de réflexion extérieure et d'émissivité dans des gammes recherchées. Cependant, l'aspect esthétique de vitrages incorporant de tels matériaux ne donnent pas entière satisfaction et présentent notamment les inconvénients suivants : une couleur en transmission non neutre et une couleur en réflexion extérieure non neutre, avec en particulier une variation importante de la couleur en réflexion extérieure en fonction de l'angle d'observation.

Ainsi, il existe un besoin pour des vitrages présentant :
- un transmission lumineuse TL de l'ordre de 50% (comprise entre 48 % et 55 %, de préférence à la fois supérieure à 50 % et inférieure à 55 %), avec une réflexion extérieure Re de l'ordre de 20% (comprise entre 18 % et 24 %, de préférence à la fois supérieure à 18 % et inférieure ou égale à 20 %) et une sélectivité S ≥ 1,5 voire S ≥ 1,8 (notamment une sélectivité de l'ordre de 1,5 pour un double vitrage avec un empilement de couche minces en face 3 ou une sélectivité S de l'ordre de 1,8 pour un double vitrage avec un empilement de couche minces en face 2) ;
- une couleur en réflexion extérieure à incidence normale (0°) telle que a*_{Re} < 0 et b*_{Re} < 0, aussi faibles que possible, et avec de préférence b*_{Re}<a*_{Re} (par exemple, a*_{Re} est compris entre -2,5 et 0 et b*_{Re} est compris entre -6,0 et -2,0, c'est-à-dire un écart entre a*_{Re} et b*_{Re} faible, par exemple d'au plus 3,0) ;
- une couleur en réflexion intérieure à incidence normale (0°) telle que : a*_{Ri} est compris entre -6,0 et 0 et b*_{Ri} est compris entre -6,0 et 0 ;
- une couleur en transmission à incidence normale (0°) telle que a*_{T} < 0 et b* < 0 ;
- une variation en angle de la couleur en réflexion intérieure faible, telle que : pour la valeur de a*_{Ri} à 60° : a*_{Ri} (60°) ≤ 0 et pour la valeur de b*_{Ri} à 60° : b*_{Ri} (60°) ≤ a*_{Ri} (60°) ; par exemple : a*(0°) -4 ≤ a*(60°) ≤ a*(0°) et b*(0°) -4 ≤ b*(60°) ≤ b*(0°).

Un objectif de l'invention est de proposer un matériau qui réponde, au moins en partie, à ces besoins et dans une version préférée à la totalité de ces besoins ; en particulier pour un double vitrage comprenant un matériau selon l'invention.

La complexité des empilements comprenant trois couches fonctionnelles rend difficile l'amélioration combinée de ces caractéristiques optiques sans nuire aux performances de contrôle solaire.

Un problème technique proche a déjà été évoqué dans la demande internationale de brevet N° WO 2017/006029 A1. On y décrit un empilement comprenant trois couches fonctionnelles en argent, le double vitrage incorporant cet empilement présentant une transmission lumineuse élevée, de l'ordre de 70 % et un facteur solaire de l'ordre de 34 %, la sélectivité étant de l'ordre de 2. Selon l'enseignement de cette publication chaque revêtement diélectrique comprend au moins une couche diélectrique haut indice dont l'indice de réfraction est d'au moins 2,15 et dont l'épaisseur optique supérieure à 20 nm.

La demande internationale de brevet N° WO 2011/147875 décrit quant à elle des empilements comprenant trois couches fonctionnelles en argent dans lesquels la seconde couche fonctionnelle présente une épaisseur physique (géométrique) inférieure à celle des autres couches fonctionnelles. Cette demande ne décrit cependant pas de vitrages présentant les propriétés optiques recherchées, comme expliqué précédemment.

La demande internationale de brevet N° WO 2017/006027 décrit aussi des empilements comprenant trois couches fonctionnelles en argent, mais les vitrages présentent une transmission lumineuse en dessous de la gamme recherchée, de l'ordre de 40 % et une sélectivité très élevée, supérieure à 2,0 en double vitrage.

La demande internationale de brevet N° WO 2017/006030 décrit aussi des empilements comprenant trois couches fonctionnelles en argent qui permettent de réaliser des vitrages présentant une transmission lumineuse dans la gamme recherchée, de l'ordre de 50 %, mais ces vitrages présentent une réflexion extérieure trop élevée.

Les inventeurs ont découvert de manière surprenante qu'en sélectionnant les épaisseurs des trois couches fonctionnelles combiné à un choix spécifique des épaisseurs des revêtements diélectriques, il est possible d'obtenir un matériau susceptible de présenter les propriétés recherchées.

La présente invention repose sur l'utilisation d'un empilement à au moins trois couches fonctionnelles métalliques (voire d'un empilement à exactement trois couches fonctionnelles métalliques) dont les épaisseurs respectives en partant du substrat porteur sont croissantes, avec une couche fonctionnelle métallique centrale relativement plus épaisse que celle plus proche du substrat, mais pas trop, et une couche fonctionnelle métallique la plus éloignée du substrat seulement légèrement plus épaisse que la couche fonctionnelle métallique centrale.

L'invention a pour d'abord pour objet un matériau selon la revendication 1. Ce matériau comprend un substrat transparent revêtu sur une face d'un empilement de couches minces comportant successivement à partir de ladite face une alternance :
- de trois couches métalliques fonctionnelles à base d'argent dénommées en partant du substrat première couche fonctionnelle Ag1, deuxième couche fonctionnelle Ag2 et troisième couche fonctionnelle Ag3, d'épaisseurs physiques respectivement Ea1, Ea2, Ea3, et
- de quatre revêtements diélectriques dénommés en partant de ladite face du substrat M1, M2, M3 et M4, d'épaisseurs optiques respectivement Eo1, Eo2, Eo3, Eo4, chaque revêtement diélectrique comportant une couche diélectrique ou un ensemble diélectrique de couches,
de manière à ce que chaque couche métallique fonctionnelle soit disposée entre deux revêtements diélectriques.

Ledit matériau selon l'invention est remarquable en ce que :
- l'épaisseur physique Ea2 de la seconde couche fonctionnelle Ag2 est supérieure à l'épaisseur physique Ea1 de la première couche fonctionnelle Ag1, avec 1,40 ≤ Ea2/Ea1 ≤1,60 ;
- l'épaisseur physique Ea3 de la troisième couche fonctionnelle Ag3 est supérieure à l'épaisseur physique Ea2 de la seconde couche fonctionnelle Ag2, avec 1,05 ≤ Ea3/Ea2 ≤ 1,2 ;
- le revêtement diélectrique M4 présente une épaisseur optique Eo4 inférieure à chacune des épaisseurs optiques Eo1, Eo2 et Eo3 des autres revêtements diélectriques M1, M2 et M3 ; et
- le revêtement diélectrique M3 présente une épaisseur optique Eo3 supérieure à chacune des épaisseurs optiques Eo1, Eo2 et Eo4 des autres revêtements diélectriques M1, M2 et M4.

Cela permet ainsi d'atteindre les performances optiques, thermiques, la transparence et l'aspect esthétique qui sont recherchés, comme expliqué précédemment.

En ajustant les épaisseurs des couches fonctionnelles et des revêtements diélectriques, la transparence du vitrage peut être contrôlée de façon à obtenir des valeurs de transmission lumineuse T_{L} sensiblement supérieures à 50 %, gamme adaptée tout particulièrement pour les vitrages destinés à être utilisés dans des régions à fort ensoleillement. Selon un avantage majeur de l'invention, l'obtention de l'aspect visuel satisfaisant, avec notamment des couleurs en réflexion extérieure particulières, avec en particulier un a*_{Re} peu éloignée du b*_{Re} (différence d'au plus 3,0) et l'obtention de cet aspect visuel ne s'opèrent pas au détriment des performances de protection solaire.

On donne ci-après d'une manière alternative ou cumulative certains modes de réalisation préférés mais non limitatifs de la présente invention :
- l'épaisseur géométrique Ea1 de la première couche fonctionnelle Ag1 est comprise entre 8 et 12 nm et l'épaisseur géométrique Ea2 et Ea3 de la seconde et de la troisième couche fonctionnelle Ag2, Ag3 est chacune comprise entre 13 et 16 nm ;
- l'épaisseur géométrique cumulée des trois couches fonctionnelles Ag1, Ag2 et Ag3 est comprise entre 30 et 50 nanomètres, et de préférence est comprise entre 35 et 40 nanomètres ;
- les épaisseurs optiques des revêtements diélectriques sont telles que : Eo4 < Eo1 < Eo2 < Eo3 ;
- l'épaisseur physique Ea2 de la seconde couche fonctionnelle Ag2 est supérieure à l'épaisseur physique Ea1 de la première couche fonctionnelle Ag1, avec 1,5 < Ea2/Ea1 < 1,8, voire 1,5 < Ea2/Ea1 < 1,7 ;
- le revêtement diélectrique M4 présente une épaisseur optique Eo4 comprise entre 70 et 90 nm ;
- le revêtement diélectrique M3 présente une épaisseur optique Eo3 comprise entre 150 et 180 nm ;
- le revêtement diélectrique M1 présente une épaisseur optique Eo1 comprise entre 100 et 130 nm ;
- le revêtement diélectrique M2 présente une épaisseur optique Eo2 comprise entre 100 et 120 nm ;
- le rapport de l'épaisseur optique Eo2 du revêtement diélectrique M2 sur l'épaisseur optique Eo1 du revêtement diélectrique M1 est supérieur à 1,05, voire supérieur à 1,1 ;
- le rapport le rapport de l'épaisseur optique Eo1 du revêtement diélectrique M1 sur l'épaisseur optique Eo4 du revêtement diélectrique M4 est inférieur à 1,5, voire inférieur à 1,4 ;
- le rapport de l'épaisseur optique Eo3 du revêtement diélectrique M3 sur l'épaisseur optique Eo1 du revêtement diélectrique M1 est supérieur à 1,4, voire supérieur à 1,5.

L'empilement de couches minces peut comporter successivement à partir de ladite face une alternance :
- de uniquement trois couches métalliques fonctionnelles à base d'argent dénommées en partant du substrat: première couche fonctionnelle Ag1, deuxième couche fonctionnelle Ag2 et troisième couche fonctionnelle Ag3, d'épaisseurs physiques respectivement Ea1, Ea2, Ea3, et
- de uniquement quatre revêtements diélectriques dénommés en partant de ladite face du substrat M1, M2, M3 et M4, d'épaisseurs optiques respectivement Eo1, Eo2, Eo3, Eo4, chaque revêtement diélectrique comportant une couche diélectrique ou un ensemble diélectrique de couches,
de manière à ce que chaque couche métallique fonctionnelle soit disposée entre deux revêtements diélectriques.

Lesdites trois couches métalliques fonctionnelles à base d'argent peuvent être des couches métalliques fonctionnelles en argent.

L'empilement peut comprendre, ou être constituée de, en partant du substrat transparent :
- un premier revêtement diélectrique M1 comprenant de préférence au moins une couche diélectrique à fonction barrière et une couche diélectrique à fonction stabilisante,
- éventuellement une couche de blocage,
- une première couche fonctionnelle Ag1,
- éventuellement une couche de blocage,
- un deuxième revêtement diélectrique M2 comprenant de préférence au moins un couche diélectrique à fonction stabilisante inférieure, une couche diélectrique à fonction barrière et une couche diélectrique à fonction stabilisante supérieure,
- éventuellement une couche de blocage,
- une deuxième couche fonctionnelle Ag2,
- éventuellement une couche de blocage,
- un troisième revêtement diélectrique M3 comprenant de préférence au moins un couche diélectrique à fonction stabilisante inférieure, une couche diélectrique à fonction barrière et une couche diélectrique à fonction stabilisante supérieure,
- éventuellement une couche de blocage,
- une troisième couche fonctionnelle Ag3,
- éventuellement une couche de blocage,
- un quatrième revêtement diélectrique M4 comprenant de préférence au moins une couche diélectrique à fonction stabilisante, une couche diélectrique à fonction barrière et éventuellement une couche de protection.

L'invention se rapporte en outre à un vitrage comprenant au moins un matériau tel que décrit précédemment. Un tel vitrage peut être sous forme de vitrage monolithique, feuilleté ou multiple et notamment un double vitrage ou un triple vitrage.

Un revêtement diélectrique au sens de l'invention peut comporter une, voire plusieurs, couche absorbante, métallique ou nitrurée ; mais cette couche ne peut pas constituer une couche métallique fonctionnelle à base d'argent car cette dernière est de type « réfléchissant » et non « absorbant ».

Toutes les caractéristiques lumineuses présentées dans la description sont obtenues selon les principes et méthodes décrits dans la norme européenne EN 410 se rapportant à la détermination des caractéristiques lumineuses et solaires des vitrages utilisés dans le verre pour la construction.

De manière conventionnelle, les indices de réfraction sont mesurés à une longueur d'onde de 550 nm. Les facteurs de transmission lumineuse T_{L} et de réflexion lumineuse R_{L} sont mesurés sous l'illuminant D65 avec un champ de vision de 2°.

Sauf indication contraire, toutes les valeurs et gammes de valeurs des caractéristiques optiques et thermiques sont données pour un vitrage double constitué de substrats clairs de type verre sodo-calcique ordinaire dont un premier substrat de 6 mm portant l'empilement de couches minces, d'un espace intercalaire de 16 mm rempli d'argon à raison de 90 % et d'air à raison de 10 % et d'un autre substrat clair également de type verre sodo-calcique, non-revêtu, d'une épaisseur de 4 mm. Le premier substrat revêtu est placé dans le double vitrage de sorte que l'empilement de couches minces se trouve en face 2 dudit vitrage. La réflexion lumineuse extérieure Re du double vitrage est mesurée du côté du premier substrat, tandis que la réflexion lumineuse intérieure Ri du double vitrage est mesurée du côté du second substrat (ne comprenant pas d'empilement).

Sauf mention contraire, les épaisseurs évoquées dans le présent document sans autres précisions sont des épaisseurs physiques, ou encore réelles ou géométriques, dénommées Ep et sont exprimées en nanomètres. A contrario, une épaisseur optique Eo d'une couche ou d'un ensemble de couches est définie comme l'épaisseur physique de la couche considérée multipliée par son indice de réfraction (n) à la longueur d'onde de 550 nm : Eo = n₅₅₀ × Ep. L'indice de réfraction étant une valeur adimensionnelle, on peut considérer que l'unité de l'épaisseur optique est la même que celle choisie pour l'épaisseur physique. Dans la présente description l'unité choisie pour les épaisseurs est le nanomètre, sauf indication contraire. Si un revêtement diélectrique est composé de plusieurs couches diélectriques, l'épaisseur optique du revêtement diélectrique correspond à la somme des épaisseurs optiques des différentes couches diélectriques constituant le revêtement diélectrique.

Dans toute la description le substrat selon l'invention est considéré posé horizontalement. L'empilement de couches minces est déposé au-dessus et au contact du substrat. Le sens des expressions « au-dessus » et « en-dessous » et « inférieur » et « supérieur » est à considérer par rapport à cette orientation. A défaut de stipulation spécifique, les expressions « au-dessus » et « en-dessous » ne signifient pas nécessairement que deux couches et/ou revêtements sont disposés au contact l'un de l'autre. Lorsqu'il est précisé qu'une couche est déposée « au contact » d'une autre couche ou d'un revêtement, cela signifie qu'il ne peut y avoir une (ou plusieurs) couche(s) intercalée(s) entre ces deux couches (ou couche et revêtement).

Au sens de la présente invention, les qualifications « première », « deuxième », « troisième » et « quatrième » pour les couches fonctionnelles ou les revêtements diélectriques sont définies en partant du substrat porteur de l'empilement et en se référant aux couches ou revêtements de même fonction. Par exemple, la couche fonctionnelle la plus proche du substrat est la première couche fonctionnelle, la suivante en s'éloignant du substrat est la deuxième couche fonctionnelle, etc.

Comme indiqué précédemment, l'invention concerne également un vitrage comprenant un matériau selon l'invention. De manière conventionnelle, les faces d'un vitrage sont désignées à partir de l'extérieur du bâtiment et en numérotant les faces des substrats de l'extérieur vers l'intérieur de l'habitacle ou du local qu'il équipe. Cela signifie que la lumière solaire incidente traverse les faces dans l'ordre croissant de leur numéro.

L'empilement est de préférence positionné dans le vitrage de sorte que la lumière incidente provenant de l'extérieur traverse le premier revêtement diélectrique avant de traverser la première couche métallique fonctionnelle. L'empilement n'est pas déposé sur la face du substrat définissant la paroi extérieure du vitrage mais sur la face intérieure de ce substrat. L'empilement est donc avantageusement positionné en face 2, la face 1 du vitrage étant la face la plus à l'extérieur du vitrage, comme habituellement.

En choisissant de monter de cette façon le vitrage, le premier revêtement diélectrique (M1) est situé entre l'extérieur et toutes les couches fonctionnelles à base d'argent de l'empilement.

De préférence, l'empilement est déposé par pulvérisation cathodique assistée par un champ magnétique (procédé magnétron). Selon ce mode de réalisation avantageux, toutes les couches de l'empilement sont déposées par pulvérisation cathodique assistée par un champ magnétique.

L'invention concerne également le procédé d'obtention d'un matériau selon l'invention, dans lequel on dépose les couches de l'empilement par pulvérisation cathodique magnétron.

Les couches fonctionnelles métalliques à base d'argent comprennent au moins 95,0 %, de préférence au moins 96,5 % et mieux au moins 98,0 % en masse d'argent par rapport à la masse de la couche fonctionnelle. De préférence, la couche métallique fonctionnelle à base d'argent comprend moins de 1,0 % en masse de métaux autres que de l'argent par rapport à la masse de la couche métallique fonctionnelle à base d'argent.

L'empilement peut comprendre en outre au moins une couche de protection supérieure, notamment à base de TiZr (c'est-à-dire comprenant du Ti et du Zr), et notamment à base de TiZrO, ou à base de SnZnO, ou de TiO₂.

Des couches de blocage peuvent être présentes dans l'empilement selon l'invention. Elles ont traditionnellement pour fonction de protéger les couches fonctionnelles d'une éventuelle dégradation lors du dépôt du revêtement antireflet supérieur et/ou lors d'un éventuel traitement thermique à haute température, du type recuit, bombage et/ou trempe.

Les couches de blocage sont par exemple choisies parmi les couches métalliques à base d'un métal ou d'un alliage métallique, les couches de nitrure métallique, les couches d'oxyde métallique et les couches d'oxynitrure métallique d'un ou plusieurs éléments choisis parmi le titane, le nickel, le chrome et le niobium telles que Ti, TiN, TiOx, Nb, NbN, Ni, NiN, Cr, CrN, NiCr, NiCrN ou encore NbNOx, NiCrOx.

L'épaisseur géométrique de telles couches est de l'ordre de quelques nanomètres, généralement inférieure à 7 nanomètres et le plus souvent proche du nanomètre ou même inférieure au nanomètre.

Lorsque ces couches de blocage sont déposées sous forme métallique, nitrurée ou oxynitrurée, ces couches peuvent subir une oxydation partielle ou totale selon leur épaisseur et la nature des couches qui les entourent, par exemple, au moment du dépôt de la couche suivante ou par oxydation au contact de la couche sous-jacente.

Selon des modes de réalisation avantageux de l'invention, la ou les couches de blocage satisfont une ou plusieurs des conditions suivantes :
- chaque couche métallique fonctionnelle est au contact d'au moins une couche de blocage choisie parmi une sous-couche de blocage et une surcouche de blocage, et/ou
- l'épaisseur de chaque couche de blocage est d'au moins 0,1 nm, de préférence comprise entre 0,1 et 1,0 nm, et/ou
- l'épaisseur totale de toutes les couches de blocage au contact des couches fonctionnelles est comprise entre 0,8 et 4,0 nm en incluant ces valeurs, de préférence entre 1,0 et 3,5 nm, voire 1,2 et 2,0 nm.

Selon des modes de réalisation avantageux de l'invention, les revêtements diélectriques satisfont une ou plusieurs des conditions suivantes :
- les revêtements diélectriques comprennent au moins une couche diélectrique à base d'oxyde ou de nitrure d'un ou plusieurs éléments choisis parmi le silicium, le titane, le zirconium, l'aluminium, l'étain, le zinc, et/ou
- au moins un revêtement diélectrique comporte au moins une couche diélectrique à fonction barrière, et/ou
- chaque des revêtements diélectriques comporte au moins une couche diélectrique à fonction barrière, et/ou
- les couches diélectriques à fonction barrière sont à base de composés de silicium et/ou d'aluminium choisis parmi les oxydes tels que SiO₂ et Al₂O₃ ou leur mélange, les nitrures Si₃N₄ et AIN ou leur mélange et les oxynitrures SiOₓN_{y} et AlOₓN_{y} ou leur mélange et/ou
- les couches diélectriques à fonction barrière sont à base de composés de silicium et/ou d'aluminium comprenant éventuellement au moins un autre élément, comme l'aluminium, le hafnium et le zirconium, et/ou
- au moins un revêtement diélectrique comprend au moins une couche diélectrique à fonction stabilisante, et/ou
- chaque revêtement diélectrique comprend au moins une couche diélectrique à fonction stabilisante, et/ou
- les couches diélectriques à fonction stabilisante sont de préférence à base d'oxyde choisi parmi l'oxyde de zinc, l'oxyde d'étain, l'oxyde de zirconium ou un mélange d'au moins deux d'entre eux,
- les couches diélectriques à fonction stabilisante sont de préférence à base d'oxyde cristallisé, notamment à base d'oxyde de zinc, éventuellement dopé à l'aide d'au moins un autre élément, comme l'aluminium, et/ou
- chaque couche fonctionnelle est au-dessus d'un revêtement diélectrique dont la couche supérieure est une couche diélectrique à fonction stabilisante, de préférence à base d'oxyde de zinc et/ou en-dessous d'un revêtement diélectrique dont la couche inférieure est une couche diélectrique à fonction stabilisante, de préférence à base d'oxyde de zinc.

De préférence, chaque revêtement diélectrique est constitué uniquement d'une ou de plusieurs couches diélectriques. De préférence, il n'y a donc pas de couche absorbante dans les revêtements diélectriques afin de ne pas diminuer la transmission lumineuse.

Les empilements de l'invention peuvent comprendre des couches diélectriques à fonction barrière. On entend par couches diélectriques à fonction barrière, une couche en un matériau apte à faire barrière à la diffusion de l'oxygène et de l'eau à haute température, provenant de l'atmosphère ambiante ou du substrat transparent, vers la couche fonctionnelle. Les matériaux constitutifs de la couche diélectrique à fonction barrière ne doivent donc pas subir de modification chimique ou structurelle à haute température qui entraînerait une modification de leurs propriétés optiques. La ou les couches à fonction barrière sont de préférence également choisies en un matériau apte à faire barrière au matériau constitutif de la couche fonctionnelle. Les couches diélectriques à fonction barrière permettent donc à l'empilement de subir sans évolution optique trop significative des traitements thermiques du type recuit, trempe ou bombage.

Les empilements de l'invention peuvent comprendre des couches diélectriques à fonction stabilisante. Au sens de l'invention, « stabilisante » signifie que l'on sélectionne la nature de la couche de façon à stabiliser l'interface entre la couche fonctionnelle et cette couche. Cette stabilisation conduit à renforcer l'adhérence de la couche fonctionnelle aux couches qui l'entourent, et de fait elle va s'opposer à la migration de son matériau constitutif.

La ou les couches diélectriques à fonction stabilisante peuvent se trouver directement au contact d'une couche fonctionnelle ou séparées par une couche de blocage.

De préférence, la dernière couche diélectrique de chaque revêtement diélectrique situé en-dessous d'une couche fonctionnelle est une couche diélectrique à fonction stabilisante. En effet, il est avantageux d'avoir une couche à fonction stabilisante, par exemple, à base d'oxyde de zinc en-dessous d'une couche fonctionnelle, car elle facilite l'adhésion et la cristallisation de la couche fonctionnelle à base d'argent et augmente sa qualité et sa stabilité à haute température.

Il est également avantageux d'avoir une couche fonction stabilisante, par exemple, à base d'oxyde de zinc au-dessus d'une couche fonctionnelle, pour en augmenter l'adhésion et s'opposer de manière optimale à la diffusion du côté de l'empilement opposé au substrat.

La ou les couches diélectriques à fonction stabilisante peuvent donc se trouver au-dessus et/ou en dessous d'au moins une couche fonctionnelle ou de chaque couche fonctionnelle, soit directement à son contact ou soit séparées par une couche de blocage.

Avantageusement, chaque couche diélectrique à fonction barrière est séparée d'une couche fonctionnelle par au moins une couche diélectrique à fonction stabilisante.

Cette couche diélectrique à fonction stabilisante peut avoir une épaisseur d'au moins 4 nm, notamment une épaisseur comprise entre 4 et 10 nm et mieux de 8 à 10 nm.

L'empilement de couches minces peut éventuellement comprendre une couche de protection. La couche de protection est de préférence la dernière couche de l'empilement, c'est-à-dire la couche la plus éloignée du substrat revêtu de l'empilement. Ces couches supérieures de protection sont considérées comme comprises dans le quatrième revêtement diélectrique. Ces couches ont en général une épaisseur comprise entre 2 et 10 nm, de préférence 2 et 5 nm. Cette couche de protection peut être choisie parmi une couche de titane, de zirconium, d'hafnium, de zinc et/ou d'étain, ce ou ces métaux étant sous forme métallique, oxydée ou nitrurée ou oxynitrurée.

La couche de protection peut par exemple être choisie parmi une couche d'oxyde de titane, une couche d'oxyde de zinc et d'étain ou une couche d'oxyde de titane et de zirconium.

Un mode de réalisation particulièrement avantageux concerne un substrat revêtu d'un empilement défini en partant du substrat transparent comprenant :
- un premier revêtement diélectrique comprenant de préférence au moins une couche diélectrique à fonction barrière et une couche diélectrique à fonction stabilisante,
- éventuellement une couche de blocage,
- une première couche fonctionnelle,
- éventuellement une couche de blocage,
- un deuxième revêtement diélectrique comprenant de préférence au moins un couche diélectrique à fonction stabilisante inférieure, une couche diélectrique à fonction barrière et une couche diélectrique à fonction stabilisante supérieure,
- éventuellement une couche de blocage,
- une deuxième couche fonctionnelle,
- éventuellement une couche de blocage,
- un troisième revêtement diélectrique comprenant de préférence au moins un couche diélectrique à fonction stabilisante inférieure, une couche diélectrique à fonction barrière et une couche diélectrique à fonction stabilisante supérieure,
- éventuellement une couche de blocage,
- une troisième couche fonctionnelle,
- éventuellement une couche de blocage,
- un quatrième revêtement diélectrique comprenant de préférence au moins une couche diélectrique à fonction stabilisante et une couche diélectrique à fonction barrière et éventuellement une couche de protection.

Selon d'autres modes possibles et avantageux de réalisation de la présente invention :
- Chaque revêtement diélectrique en-dessous d'une couche fonctionnelle comporte une dernière couche stabilisante à base d'oxyde de zinc cristallisé, et qui est au contact de la couche fonctionnelle déposée juste au-dessus.
- Chaque revêtement diélectrique au-dessus d'une couche fonctionnelle comporte une première couche stabilisante à base d'oxyde de zinc cristallisé, et qui est au contact de la couche fonctionnelle déposée juste en dessous.
- Chaque revêtement diélectrique comporte une couche diélectrique à fonction barrière à base de nitrure de silicium, dopé à l'aluminium appelée ici Si₃N₄.
- Chaque couche fonctionnelle métallique est en-dessous et au contact d'une couche de blocage.
- L'empilement comprend en outre une couche de protection en TiZr ou en oxyde de titane et de zirconium d'épaisseur inférieure à 5 nanomètres.

Les substrats transparents selon l'invention sont de préférence en un matériau rigide minéral, comme en verre, ou organiques à base de polymères (ou en polymère).

Les substrats transparents organiques selon l'invention peuvent également être en polymère, rigides ou flexibles. Des exemples de polymères convenant selon l'invention comprennent, notamment :
- le polyéthylène,
- les polyesters tels que le polyéthylène téréphtalate (PET), le polybutylène téréphtalate (PBT), le polyéthylène naphtalate (PEN) ;
- les polyacrylates tels que le polyméthacrylate de méthyle (PMMA) ;
- les polycarbonates ;
- les polyuréthanes ;
- les polyamides ;
- les polyimides ;
- les polymères fluorés comme les fluoroesters tels que l'éthylène tétrafluoroéthylène (ETFE), le polyfluorure de vinylidène (PVDF), le polychlorotrifluorethylène (PCTFE), l'éthylène de chlorotrifluorethylène (ECTFE), les copolymères éthylène-propylène fluores (FEP) ;
- les résines photoréticulables et/ou photopolymérisables, telles que les résines thiolène, polyuréthane, uréthane-acrylate, polyester-acrylate et
- les polythiouréthanes.

Le substrat est de préférence une feuille de verre ou de vitrocéramique.

Le substrat est de préférence transparent, incolore (il s'agit alors d'un verre clair ou extra-clair) ou coloré, par exemple en bleu, gris ou bronze. Le verre est de préférence de type silico-sodo-calcique, mais il peut également être en verre de type borosilicate ou alumino-borosilicate.

Le substrat possède avantageusement au moins une dimension supérieure ou égale à 1 m, voire 2 m et même 3 m. L'épaisseur du substrat varie généralement entre 0,5 mm et 19 mm, de préférence entre 0,7 et 9 mm, notamment entre 2 et 8 mm, voire entre 4 et 6 mm. Le substrat peut être plan ou bombé, voire flexible.

Le matériau, c'est-à-dire le substrat revêtu de l'empilement, peut subir un traitement thermique à température élevée tel qu'un recuit, par exemple par un recuit flash tel qu'un recuit laser ou flammage, une trempe et/ou un bombage. La température du traitement thermique est supérieure à 400 °C, de préférence supérieure à 450 °C, et mieux supérieure à 500 °C. Le substrat revêtu de l'empilement peut donc être bombé et/ou trempé.

Le vitrage de l'invention peut être sous forme de vitrage monolithique, feuilleté ou multiple, en particulier double vitrage ou triple vitrage.

Dans le cas d'un vitrage monolithique ou multiple, l'empilement est de préférence déposé en face 2, c'est-à-dire qu'il se trouve sur le substrat définissant la paroi extérieure du vitrage et plus précisément sur la face intérieure de ce substrat.

Un vitrage monolithique comporte 2 faces, la face 1 est à l'extérieur du bâtiment et constitue donc la paroi extérieure du vitrage, la face 2 est à l'intérieur du bâtiment et constitue donc la paroi intérieure du vitrage.

Un vitrage multiple comprend au moins deux substrats maintenus à distance de manière à délimiter une cavité remplie par un gaz isolant. Les matériaux selon l'invention conviennent tout particulièrement lorsqu'ils sont utilisés dans des double-vitrages à isolation thermique renforcée (ITR).

Un double vitrage comporte 4 faces, la face 1 est à l'extérieur du bâtiment et constitue donc la paroi extérieure du vitrage, la face 4 est à l'intérieur du bâtiment et constitue donc la paroi intérieure du vitrage, les faces 2 et 3 étant à l'intérieur du double vitrage.

De la même manière, un triple vitrage comporte 6 faces, la face 1 est à l'extérieur du bâtiment (paroi extérieure du vitrage), la face 6 à l'intérieur du bâtiment (paroi intérieure du vitrage) et les faces 2 à 5 sont à l'intérieur du triple vitrage.

Un vitrage feuilleté comporte au moins une structure de type premier substrat / feuille(s) / deuxième substrat. L'empilement de couches minces est positionné sur l'une au moins des faces d'un des substrats. L'empilement peut être sur la face du deuxième substrat non au contact de la feuille, de préférence polymère. Ce mode de réalisation est avantageux lorsque le vitrage feuilleté est monté en double vitrage avec un troisième substrat.

Le vitrage selon l'invention, utilisé comme vitrage monolithique ou dans un vitrage multiple de type double-vitrage, présente des couleurs en réflexion extérieure neutres, agréables et douces, dans la gamme des bleus ou bleus-verts (en particulier des couleurs dont la longueur d'onde dominante est de l'ordre de 450 à 500 nanomètres). De plus, cet aspect visuel reste quasiment inchangé quel que soit l'angle d'incidence avec lequel le vitrage est observé (incidence normale et sous angle). Cela signifie qu'un observateur n'a pas l'impression d'une inhomogénéité significative de teinte ou d'aspect.

Par « couleur dans le bleu-vert » au sens de la présente invention, il faut comprendre que dans le système de mesure de couleur L*a*b*, a* est compris entre -10,0 et 0,0, et b* est compris entre -10,0 et 0,0.

Le vitrage de l'invention présente de préférence des couleurs en réflexion côté extérieur à incidence normale (0°) dans le système de mesure de couleur L*a*b* :
- a*_{Re} compris entre -2,5 et 0,0, et
- b*_{Re} est compris entre -6,0 et -2,0,
- avec en outre, de préférence, une différence d'au plus 3,0 entre a*_{Re} et b*_{Re}.

Le vitrage de l'invention présente de préférence des couleurs en transmission à incidence normale (0°) dans le système de mesure de couleur L*a*b* avec a* compris entre -10,0 et 0,0, de préférence entre -5,0 et 0,0 et une valeur de b* négative.

Selon des modes de réalisation avantageux, le vitrage de l'invention sous forme d'un double vitrage comprenant l'empilement positionné en face 2 permet d'atteindre notamment les performances suivantes :
- un facteur solaire g inférieur ou égal à 30 % et
- une transmission lumineuse sensiblement supérieure à 50,0 % et
- une sélectivité élevée d'au moins 1,8, et/ou
- une réflexion lumineuse côté extérieur, inférieure ou égale à 20,0 %.

Les détails et caractéristiques avantageuses de l'invention ressortent des exemples non limitatifs suivants, illustrés à l'aide de la figure jointe.

Les proportions entre les différents éléments ne sont pas respectées afin de faciliter la lecture de la figure.

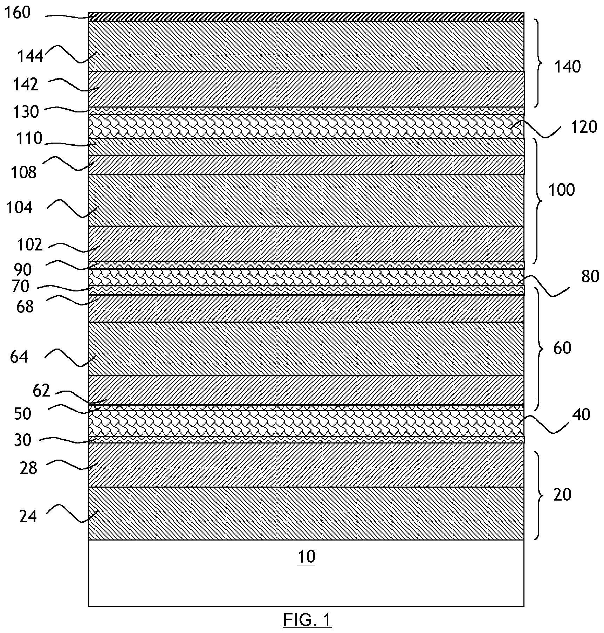

La figure 1 illustre une structure d'empilement selon l'invention à uniquement trois couches métalliques fonctionnelles 40, 80, 120, cette structure étant déposée sur un substrat 10 verrier, transparent. Chaque couche fonctionnelle 40, 80, 120 est disposée entre deux revêtements diélectriques 20, 60, 100, 140 de telle sorte que :
- la première couche fonctionnelle 40 en partant du substrat est disposée entre les revêtements diélectrique 20, 60,
- la deuxième couche fonctionnelle 80 est disposée entre les revêtements diélectrique 60, 100 et
- la troisième couche fonctionnelle 120 est disposée entre les revêtements diélectriques 100, 140.

Ces revêtements diélectriques 20, 60, 100, 140 comportent chacun au moins une couche diélectrique 24, 28 ; 62, 64, 68 ; 102, 104, 108 ; 142, 144.

L'empilement peut comprendre également :
- des sous-couches de blocage 30, 70 situées au contact d'une couche fonctionnelle,
- des surcouches de blocage 50, 90 et 130 situées au contact d'une couche fonctionnelle,
- une couche de protection 160, par exemple en TiZr ou en oxyde de titane et de zirconium.
Selon l'invention :
- l'épaisseur physique Ea2 de la seconde couche fonctionnelle Ag2(80) est supérieure à l'épaisseur physique Ea1 de la première couche fonctionnelle Ag1(40), avec 1,40 ≤ Ea2/Ea1 ≤ 1,60 ; voire 1,5 < Ea3/Ea2 < 1,9 ;
- l'épaisseur physique Ea3 de la troisième couche fonctionnelle Ag3(120) est supérieure à l'épaisseur physique Ea2 de la seconde couche fonctionnelle Ag2(80), avec 1,05 ≤ Ea3/Ea2 ≤ 1,20 ; voire 1,00 < Ea3/Ea2 ≤ 1,20 ;
- le revêtement diélectrique M4(140) présente une épaisseur optique Eo4 inférieure à chacune des épaisseurs optiques Eo1, Eo2 et Eo3 des autres revêtements diélectriques M1 (20), M2(60) et M3(100) ; et
- le revêtement diélectrique M3(100) présente une épaisseur optique Eo3 supérieure à chacune des épaisseurs optiques Eo1, Eo2 et Eo4 des autres revêtements diélectriques M1 (20), M2(60) et M4(140).

### Exemples :

### I. Préparation des substrats : Empilements, conditions de dépôt et traitements thermiques

Des empilements de couches minces définis ci-après sont déposés sur des substrats en verre sodo-calcique clair d'une épaisseur de 6 mm.

Dans les exemples :
- les couches fonctionnelles sont des couches d'argent (Ag),
- les couches de blocage sont des couches métalliques en alliage de nickel et de chrome (NiCr),
- les couches barrières sont à base de nitrure de silicium, dopé à l'aluminium (« Si₃N₄ »),
- les couches stabilisantes sont en oxyde de zinc dopé aluminium (« ZnO »).

Les conditions de dépôt des couches, qui ont été déposées par pulvérisation (pulvérisation dite « cathodique magnétron »), sont résumées dans le tableau 1.

**Tableau 1**

| | Cible employée | Pression de dépôt | Gaz | n à 550 nm |
|---|---|---|---|---|
| Si₃N₄ | Si:Al à 92:8 (% en poids) | 3,2.10⁻³ mbar | Ar /(Ar + N2) à 55 % | 2,03 |
| ZnO | Zn:Al à 98:2 (% en poids) | 1,8.10⁻³ mbar | Ar /(Ar + O2) à 63 % | 1,95 |
| NiCr | Ni (80% at.) ; Cr (20% at.) | 2-3.10⁻³ mbar | Ar à 100 % | - |
| Ag | Ag | 3.10-3 mbar | Ar à 100 % - | |

| | | | | |
|---|---|---|---|---|
| At. = atomique | | | | |

Le tableau 2 liste les matériaux et les épaisseurs physiques en nanomètres (sauf autre indication) de chaque couche et l'épaisseur optique (en nanomètres) correspondante de chaque revêtement diélectrique en fonction de leur position vis-à-vis du substrat porteur de l'empilement (dernière ligne en bas du tableau).

**Tableau 2**

| | **n° couche sur** **figure1** | **Ex1 (inv)** | **Ex2 (inv)** | **Ex3 (comp)** | **Ex4 (comp)** | **Ex5 (comp)** | **Ex6 (comp)** | **Ex7 (comp)** |
|---|---|---|---|---|---|---|---|---|
| Eo du revêtement diélectrique M4 avec : | 140 | 79 | 80 | 45 | NA | 80 | 76 | 76 |
| Ep (Si₃N₄) | 144 | 32,3 | | NA | NA | NA | 30,8 | 30,6 |
| Ep (ZnO) | 142 | 7,0 | | NA | NA | NA | 7,0 | 7,0 |
| Ep couche blocage (NiCr) | 130 | 0,2 | 0,4 | 2,0 | NA | 0,6 | 0,2 | 0,2 |
| Ep (Ag3) (couche fonctionnelle) | 120 | 15,3 | 14,7 | 10,0 | NA | 14,8 | 14,0 | 15,0 |
| Eo du revêtement diélectrique M3 avec : | 100 | 160 | 163 | 65 | 90 | 155 | 168 | 168 |
| Ep (ZnO) | 110 | 7,0 | | NA | NA | NA | 7,0 | 7,0 |
| Ep (SnZnO) | 108 | 10,0 | | NA | NA | NA | 10,0 | 10,0 |
| Ep (Si₃N₄) | 104 | 56,0 | | NA | NA | NA | 59,8 | 59,8 |
| Ep (ZnO) | 102 | 7,0 | | NA | NA | NA | 7,0 | 7,0 |
| Ep couche blocage (NiCr) | 90 | 0,2 | 0,2 | 1,8 | 1,3 | 0,4 | 0,2 | 0,2 |
| Ep Ag2 (couche fonctionnelle) | 80 | 14,0 | 13,0 | 9,1 | 12,6 | 11,5 | 15,3 | 15,0 |
| Ep couche blocage (NiCr) | 70 | 0,4 | 0,3 | - | - | 0,5 | 0,4 | 0,4 |
| Eo du revêtement diélectrique M2 avec : | 60 | 115 | 110 | 130 | 140 ? | 130 | 107 | 107 |
| Ep (ZnO) | 68 | 7,0 | | NA | NA | NA | 7,0 | 7,0 |
| Ep (Si₃N₄) | 64 | 43,6 | | NA | NA | NA | 40,0 | 40,0 |
| Ep (ZnO) | 62 | 7,0 | | NA | NA | NA | 7,0 | 7,0 |
| Ep couche blocage (NiCr) | 50 | 0,5 | 0,4 | 2,5 | 1,4 | 0,5 | 0,5 | 0,5 |
| Ep Ag1 (couche fonctionnelle) | 40 | 9,0 | 9,0 | 14,0 | 13,2 | 10,7 | 9,0 | 9,0 |
| Ep couche blocage (NiCr) | 30 | 0,4 | 0,45 | - | - | 0,5 | 0,4 | 0,4 |
| Eo du revêtement diélectrique M1 avec : | 20 | 111 | 132 | 80 | 30 | 95 | 85 | 85 |
| Ep (ZnO) | 28 | 7,0 | | NA | NA | NA | 7,0 | 7,0 |
| Ep (Si₃N₄) | - | - | - | - | 11 | - | | |
| Ep Couche absorbante (NiCr) | - | - | - | - | 0,7 | - | | |
| Ep (Si₃N₄) | 24 | 48,7 | | NA | 4 | NA | 34,6 | 34,6 |
| Substrat verre (mm) | 6 | 6 | 6 | 6 | 6 | 6 | 6 | 6 |

| | | | | | | | | |
|---|---|---|---|---|---|---|---|---|
| *Ep : Epaisseur physique (nm) ; Eo : Epaisseur optique (nm). | | | | | | | | |

Les exemples 1 et 2 sont des exemples selon l'invention. Les exemples comparatifs 3 à 7 sont des exemples hors invention.

Les exemples 1 à 3, 5 sont des exemples à trois couches métalliques fonctionnelles à base d'argent. L'exemple 4 est particulier car ce n'est pas un empilement à trois couches métalliques fonctionnelles à base d'argent : il n'a que deux couches métalliques fonctionnelles à base d'argent ; mais il comporte en outre une couche métallique absorbante : la couche en NiCr positionnée entre deux couches de nitrure de silicium. Il a été choisi car ses propriétés sont en partie celles recherchées (notamment le facteur solaire, la transmission lumineuse et la sélectivité, comme expliqué ci-après).

L'exemple 6 est particulier en ce que la seconde couche fonctionnelle est plus épaisse que la troisième couche fonctionnelle et cette troisième couche fonctionnelle est plus épaisse que la première couche fonctionnelle ; ces épaisseurs, ainsi que celles des autres couches, ont été optimisées pour obtenir une sélectivité d'au moins 1,8, avec une transmission lumineuse légèrement supérieure à 50 %.

L'exemple 7 est particulier en ce que la seconde et la troisième couche fonctionnelle ont la même épaisseur et que cette épaisseur est plus élevée que celle de la première couche fonctionnelle ; ces épaisseurs, ainsi que celles des autres couches, ont été optimisées pour obtenir une sélectivité d'au moins 1,8, avec une transmission lumineuse légèrement supérieure à 50 %.

### II. Performances « contrôle solaire » et colorimétrie

Le tableau 3 liste les principales caractéristiques optiques mesurées lorsque les vitrages font parties de double vitrage de structure 6/16/4 : (extérieur) verre de 6 mm / espace intercalaire de 16 mm rempli d'argon à 90 % / verre de 4 mm (intérieur), l'empilement étant positionné en face 2 (la face 1 du vitrage étant la face la plus à l'extérieur du vitrage, comme habituellement).

Pour ces doubles vitrages,
- TL indique : la transmission lumineuse dans le visible en %, mesurée selon l'illuminant D65 à 2° Observateur ;
- a*_{T} et b*_{T} indiquent les couleurs à incidence normale (0°) en transmission a* et b* dans le système L*a*b* mesurées selon l'illuminant D65 à 2° Observateur et mesurées perpendiculairement au vitrage ;
- Re indique : la réflexion lumineuse dans le visible en %, mesurée selon l'illuminant D65 à 2° Observateur du côté de la face la plus à l'extérieur, la face 1 ;
- a*_{Re} et b*_{Re} indiquent les couleurs à incidence normale (0°) en réflexion a* et b* dans le système L*a*b* mesurées selon l'illuminant D65 à 2° Observateur du côté de la face la plus à l'extérieur et mesurées ainsi perpendiculairement au vitrage,
- Ri indique : la réflexion lumineuse dans le visible en %, mesurée selon l'illuminant D65 à 2° Observateur du côté de la face intérieur, la face 4 ;
- a*_{Ri} et b*_{Ri} indiquent les couleurs à incidence normale (0°) en réflexion a* et b* dans le système L*a*b* mesurées selon l'illuminant D65 à 2° Observateur du côté de la face intérieur et mesurées ainsi perpendiculairement au vitrage ;
- a*(60°) et b*(60°) indiquent les couleurs a* et b* en réflexion dans le système L*a*b* mesurées à incidence à 60° par rapport à la normale selon l'illuminant D65 à 2° Observateur du côté de la face intérieur.

Les valeurs cibles indiquées ci-après sont les valeurs qui sont préférées toutes à la fois pour l'invention.

**Tableau 3**

| | **Valeur cible** | **Ex1 (inv)** | **Ex2 (inv)** | **Ex3** | **Ex4** | **Ex5** | **Ex6** | **Ex7** |
|---|---|---|---|---|---|---|---|---|
| Facteurs solaire « g » | | 28,9% | 27,9% | 25,4 % | 30,0% | 29,2% | 28,2% | 28,1% |
| Sélectivité « s » | ≥ 1,8 | 1,9 | 1,9 | 2,1 | 1,8 | 1,8 | 1,8 | 1,8 |
| T_{L}(%) | > 50 | 55,0 | 52,0 | 52,4 | 53,3 | 54,0 | 52,2 | 53,3 |
| a*_{T} | < 0 | -5,8 | -5,7 | -6,3 | -6,3 | -6,0 | -4,8 | -5,0 |
| b*_{T} | < 0 | -3,0 | -1,7 | 4,5 | 3,1 | -5,5 | -4,0 | -1,9 |
| Re(%) | ≤ 20 | 16,1 | 20,0 | 16,8 | 13,6 | 10,9 | 17,6 | 16,8 |
| a*_{Re} | {-2,5;0} | -1,8 | -2,3 | -3,6 | -0,5 | -3,1 | 0,5 | -0,9 |
| b*_{Re} | {-6,0;-2} | -4,5 | -5,4 | -13,6 | -2,6 | -5,4 | -1,8 | -5,9 |
| Ri(%) | ≤ 20 % | 16,5% | 19,0% | 15,3% | 16,8% | 11,6% | 20,6 | 19,1 |
| a*_{Ri} | {-6,0;0} | -1,0 | -5,1 | -7,3 | -7,8 | -2,5 | -5,9 | -5,8 |
| b*_{Ri} | {-6,0;0} | -5,1 | -4,7 | -3,8 | -2,1 | -5,0 | -0,4 | -5,8 |
| a*(60°) | < 0 | -3,3 | -3,2 | -1,0 | 0,3 | -7,4 | -3,8 | -4 |
| b*(60°) | <a*(60°) | -4,7 | -6,6 | -12 | -3,8 | -2,5 | -3,6 | -6,5 |

Selon l'invention, il est possible de réaliser un vitrage comprenant un empilement à trois couches fonctionnelles métalliques qui présente une transmission lumineuse supérieure à 50 %, une sélectivité élevée et une apparence en couleur neutre.

Ainsi, il est particulièrement satisfaisant que :
- l'épaisseur physique Ea2 de la seconde couche fonctionnelle Ag2 soit supérieure à l'épaisseur physique Ea1 de la première couche fonctionnelle Ag1, avec 1,44 ≤ Ea2/Ea1 ≤ 1,55 ;
- l'épaisseur physique Ea3 de la troisième couche fonctionnelle Ag3 soit supérieure à l'épaisseur physique Ea2 de la seconde couche fonctionnelle Ag2, avec 1,09 ≤ Ea3/Ea2 ≤ 1,13 ;
- le revêtement diélectrique M4 présente une épaisseur optique Eo4 inférieure à chacune des épaisseurs optiques Eo1, Eo2 et Eo3 des autres revêtements diélectriques M1, M2 et M3 ; et que
- le revêtement diélectrique M3 présente une épaisseur optique Eo3 supérieure à chacune des épaisseurs optiques Eo1, Eo2 et Eo4 des autres revêtements diélectriques M1, M2 et M4.

L'exemple 3 n'est pas satisfaisant pour les valeurs soulignées dans les cases :
- il présente une apparence en transmission trop dans les jaunes : b*_{T} est supérieur à zéro et est relativement élevé ;
- il présente une apparence en réflexion extérieure à incidence normale qui est trop marquée : a*_{Re} et b*_{Re} sont chacun trop élevés en valeur absolue ;
- il présente une apparence en réflexion intérieure à incidence normale qui est trop marquée : a*_{Ri} est trop élevé en valeur absolue.

L'exemple 4 n'est pas satisfaisant pour les valeurs soulignées dans les cases :
- il présente une apparence en réflexion intérieure à incidence normale qui est trop marquée : a*_{Ri} est trop élevé en valeur absolue ;
- il présente une couleur en réflexion intérieure qui n'est pas stable en fonction de l'angle d'observation : a*(60°) est trop différent de a*_{Ri}.

L'exemple 5 n'est pas satisfaisant pour les valeurs soulignées dans les cases :
- il présente une apparence en réflexion extérieure à incidence normale qui est trop marquée : a*_{Re} est trop élevé en valeur absolue ;
- il présente une couleur en réflexion intérieure qui n'est pas stable en fonction de l'angle d'observation : a*(60°) est trop différent de a*_{Ri} ; en outre, b*(60°) est supérieur à a*(60°).

L'exemple 6 n'est pas satisfaisant pour les valeurs soulignées dans les cases :
- il présente une apparence en réflexion extérieure à incidence normale qui est non souhaitée : a*_{Re} est positif ;
- il présente une apparence en réflexion intérieure à incidence normale qui est non souhaitée : Riᵢ est trop élevée.

L'exemple 7 n'est pas satisfaisant pour les valeurs soulignées dans les cases : il présente une apparence en réflexion extérieure à incidence normale qui est trop marquée, par le fait que la différence entre a*_{Re} et b*_{Re} est trop élevée en valeur absolue ; une différence de 5 points entre les deux valeurs fait trop ressortir l'aspect bleu (il paraît plus intense).

Les exemples 1 et 2 selon l'invention présentent tous une coloration en transmission agréable et très faible, de préférence dans la gamme des bleus ou bleus-verts mais très peu intense (grâce en particulier au faible écart entre a*_{Re} et b*_{Re} qui est d'au plus 3,0 points).

On voit sur les données reportées dans le tableau 3 que les vitrages selon l'invention (exemples 1 et 2) présentent à la fois un facteur solaire inférieur ou égal à 30 % pour une sélectivité légèrement inférieure à 2. Ces vitrages présentent en plus une réflexion extérieure égale ou inférieure à 20%, combinée à une valeur très faible et négative des facteurs a*_{Re} et b*_{Re} permettant l'obtention de l'effet « neutre » recherché. Ces vitrages ont également des couleurs en transmission neutres ou alternativement une teinte légèrement bleue-verte.

## Revendications

1. Matériau comprenant un substrat transparent revêtu sur une face d'un empilement de couches minces comportant successivement à partir de ladite face une alternance :
- de trois couches métalliques fonctionnelles à base d'argent dénommées en partant du substrat première couche fonctionnelle Ag1, deuxième couche fonctionnelle Ag2 et troisième couche fonctionnelle Ag3, d'épaisseurs physiques respectivement Ea1, Ea2, Ea3, et
- de quatre revêtements diélectriques dénommés en partant de ladite face du substrat M1, M2, M3 et M4, d'épaisseurs optiques respectivement Eo1, Eo2, Eo3, Eo4, chaque revêtement diélectrique comportant une couche diélectrique ou un ensemble diélectrique de couches,
de manière à ce que chaque couche métallique fonctionnelle soit disposée entre deux revêtements diélectriques,
ledit matériau étant **caractérisé en ce que** :
- l'épaisseur physique Ea2 de la seconde couche fonctionnelle Ag2 est supérieure à l'épaisseur physique Ea1 de la première couche fonctionnelle Ag1, avec 1,40 ≤ Ea2/Ea1 ≤ 1,60 ;
- l'épaisseur physique Ea3 de la troisième couche fonctionnelle Ag3 est supérieure à l'épaisseur physique Ea2 de la seconde couche fonctionnelle Ag2, avec 1,05 ≤ Ea3/Ea2 ≤ 1,2 ;
- le revêtement diélectrique M4 présente une épaisseur optique Eo4 inférieure à chacune des épaisseurs optiques Eo1, Eo2 et Eo3 des autres revêtements diélectriques M1, M2 et M3 ; et
- le revêtement diélectrique M3 présente une épaisseur optique Eo3 supérieure à chacune des épaisseurs optiques Eo1, Eo2 et Eo4 des autres revêtements diélectriques M1, M2 et M4.

2. Matériau selon la revendication 1, dans lequel l'épaisseur physique Ea1 de la première couche fonctionnelle Ag1 est comprise entre 8 et 12 nm et l'épaisseur physique Ea2 et Ea3 de la seconde et de la troisième couche fonctionnelle Ag2, Ag3 est chacune comprise entre 13 et 16 nm.

3. Matériau selon la revendication 1 ou 2, dans lequel le revêtement diélectrique M4 présente une épaisseur optique Eo4 comprise entre 70 et 90 nm.

4. Matériau selon l'une des revendications 1 à 3, dans lequel le revêtement diélectrique M3 présente une épaisseur optique Eo3 comprise entre 150 et 180 nm.

5. Matériau selon l'une des revendications 1 à 4, dans lequel le revêtement diélectrique M1 présente une épaisseur optique Eo1 comprise entre 100 et 130 nm.

6. Matériau selon l'une des revendications 1 à 5, dans lequel le revêtement diélectrique M2 présente une épaisseur optique Eo2 comprise entre 100 et 120 nm.

7. Matériau selon l'une des revendications 1 à 6, dans lequel le rapport de l'épaisseur optique Eo2 du revêtement diélectrique M2 sur l'épaisseur optique Eo1 du revêtement diélectrique M1 est supérieur à 1,05, voire supérieur à 1,1.

8. Matériau selon l'une des revendications 1 à 7, dans lequel le rapport le rapport de l'épaisseur optique Eo1 du revêtement diélectrique M1 sur l'épaisseur optique Eo4 du revêtement diélectrique M4 est inférieur à 1,5, voire inférieur à 1,4.

9. Matériau selon l'une des revendications 1 à 8, dans lequel le rapport de l'épaisseur optique Eo3 du revêtement diélectrique M3 sur l'épaisseur optique Eo1 du revêtement diélectrique M1 est supérieur à 1,4, voire supérieur à 1,5.

10. Vitrage comprenant au moins un matériau selon l'une quelconque des revendications 1 à 9, ledit vitrage étant de préférence sous forme de vitrage feuilleté ou multiple, en particulier sous forme de double vitrage ou de triple vitrage.

## Patentansprüche

1. Material, umfassend ein transparentes Substrat, das auf einer Seite mit einem Stapel dünner Schichten beschichtet ist, der ausgehend von der genannten Seite nacheinander abwechselnd aufweist:
- drei metallische Funktionsschichten auf Silberbasis, die ausgehend von dem Substrat als erste Funktionsschicht Ag1, zweite Funktionsschicht Ag2 und dritte Funktionsschicht Ag3 bezeichnet werden, mit physikalischen Dicken Ea1, Ea2 beziehungsweise Ea3, und
- vier dielektrische Beschichtungen, die ausgehend von der Seite des Substrats als M1, M2, M3 und M4 bezeichnet werden, mit optischen Dicken Eo1, Eo2, Eo3 beziehungsweise Eo4, wobei jede dielektrische Beschichtung eine dielektrische Schicht oder einen dielektrischen Satz von Schichten aufweist,
sodass jede metallische Funktionsschicht zwischen zwei dielektrischen Beschichtungen angeordnet ist,
wobei das Material **dadurch gekennzeichnet ist, dass:**
- die physikalische Dicke Ea2 der zweiten Funktionsschicht Ag2 größer als die physikalische Dicke Ea1 der ersten Funktionsschicht Ag1, mit 1,40 ≤ Ea2/Ea1 ≤ 1,60, ist;
- die physikalische Dicke Ea3 der dritten Funktionsschicht Ag3 größer als die physikalische Dicke Ea2 der zweiten Funktionsschicht Ag2, mit 1,05 ≤ Ea3/Ea2 ≤ 1,2, ist;
- die dielektrische Beschichtung M4 eine optische Dicke Eo4, die kleiner als jede der optischen Dicken Eo1, Eo2, Eo4 der anderen dielektrischen Beschichtungen M1, M2 und M3 ist, vorweist; und
- die dielektrische Beschichtung M3 eine optische Dicke Eo3, die größer als jede der optischen Dicken Eo1, Eo2 und Eo4 der anderen dielektrischen Beschichtungen M1, M2 und M4 ist, vorweist.

2. Material nach Anspruch 1, wobei die physikalische Dicke Ea1 der ersten Funktionsschicht Ag1 zwischen 8 und 12 nm liegt und die physikalische Dicke Ea2 und Ea3 der zweiten und der dritten Funktionsschicht Ag2, Ag3 jeweils zwischen 13 und 16 nm liegt.

3. Material nach Anspruch 1 oder 2, wobei die dielektrische Beschichtung M4 eine optische Dicke Eo4 zwischen 70 und 90 nm vorweist.

4. Material nach einem der Ansprüche 1 bis 3, wobei die dielektrische Beschichtung M3 eine optische Dicke Eo3 zwischen 150 und 180 nm vorweist.

5. Material nach einem der Ansprüche 1 bis 4, wobei die dielektrische Beschichtung M1 eine optische Dicke Eo1 zwischen 100 und 130 nm vorweist.

6. Material nach einem der Ansprüche 1 bis 5, wobei die dielektrische Beschichtung M2 eine optische Dicke Eo2 zwischen 100 und 120 nm vorweist.

7. Material nach einem der Ansprüche 1 bis 6, wobei das Verhältnis der optischen Dicke Eo2 der dielektrischen Beschichtung M2 zu der optischen Dicke Eo1 der dielektrischen Beschichtung M1 größer als 1,05, sogar größer als 1,1, ist.

8. Material nach einem der Ansprüche 1 bis 7, wobei das Verhältnis der optischen Dicke Eo1 der dielektrischen Beschichtung M1 zu der optischen Dicke Eo4 der dielektrischen Beschichtung M4 kleiner als 1,5, sogar kleiner als 1,4, ist.

9. Material nach einem der Ansprüche 1 bis 8, wobei das Verhältnis der optischen Dicke Eo3 der dielektrischen Beschichtung M3 zu der optischen Dicke Eo1 der dielektrischen Beschichtung M1 größer als 1,4, sogar größer als 1,5, ist.

10. Verglasung, umfassend mindestens ein Material nach einem der Ansprüche 1 bis 9, wobei die Verglasung vorzugsweise in Form einer Verbund- oder Mehrfachverglasung, insbesondere in Form einer Doppelverglasung oder Dreifachverglasung, vorliegt.

## Claims

1. A material comprising a transparent substrate coated on one face with a stack of thin layers successively comprising, starting from said face, an alternation:
- of three silver-based functional metal layers denoted, starting from the substrate, first functional layer Ag1, second functional layer Ag2 and third functional layer Ag3, with physical thicknesses respectively Ta1, Ta2 and Ta3, and
- of four dielectric coatings denoted, starting from said face of the substrate, M1, M2, M3 and M4, with optical thicknesses respectively To1, To2, To3 and To4, each dielectric coating comprising a dielectric layer or a dielectric assembly of layers,
so that each functional metal layer is positioned between two dielectric coatings,
said material being **characterized in that**:
- the physical thickness Ta2 of the second functional layer Ag2 is greater than the physical thickness Ta1 of the first functional layer Ag1, with 1.40 ≤ Ta2/Ta1 ≤ 1.60;
- the physical thickness Ta3 of the third functional layer Ag3 is greater than the physical thickness Ta2 of the second functional layer Ag2, with 1.05 ≤ Ta3/Ta2 ≤ 1.2;
- the dielectric coating M4 exhibits a lower optical thickness To4 than each of the optical thicknesses To1, To2 and To3 of the other dielectric coatings M1, M2 and M3; and
- the dielectric coating M3 exhibits a greater optical thickness To3 than each of the optical thicknesses To1, To2 and To4 of the other dielectric coatings M1, M2 and M4.

2. The material as claimed in claim 1, in which the physical thickness Ta1 of the first functional layer Ag1 is between 8 and 12 nm and the physical thicknesses Ta2 and Ta3 of the second and of the third functional layers Ag2 and Ag3 are each between 13 and 16 nm.

3. The material as claimed in claim 1 or 2, in which the dielectric coating M4 exhibits an optical thickness To4 of between 70 and 90 nm.

4. The material as claimed in one of claims 1 to 3, in which the dielectric coating M3 exhibits an optical thickness To3 of between 150 and 180 nm.

5. The material as claimed in one of claims 1 to 4, in which the dielectric coating M1 exhibits an optical thickness To1 of between 100 and 130 nm.

6. The material as claimed in one of claims 1 to 5, in which the dielectric coating M2 exhibits an optical thickness To2 of between 100 and 120 nm.

7. The material as claimed in one of claims 1 to 6, in which the ratio of the optical thickness To2 of the dielectric coating M2 to the optical thickness To1 of the dielectric coating M1 is greater than 1.05, indeed even greater than 1.1.

8. The material as claimed in one of claims 1 to 7, in which the ratio of the optical thickness To1 of the dielectric coating M1 to the optical thickness To4 of the dielectric coating M4 is less than 1.5, indeed even less than 1.4.

9. The material as claimed in one of claims 1 to 8, in which the ratio of the optical thickness To3 of the dielectric coating M3 to the optical thickness To1 of the dielectric coating M1 is greater than 1.4, indeed even greater than 1.5.

10. A glazing comprising at least one material as claimed in any one of claims 1 to 9, said glazing preferably being in the form of a laminated or multiple glazing, in particular in the form of a double glazing or of a triple glazing.
